# EUROPEAN PATENT APPLICATION

(11) **EP 1 510 138 A1**
(43) Date of publication of application: **02.03.2005**
(21) Application number: 02732784.0
(22) Date of filing: 31.05.2002
(51) Int. Cl.: A23L 1/212, A23B 7/14

(54) **METHOD OF DEHYDRATING OLIVES FOR CONSUMPTION AND THE EQUIPMENT NECESSARY THEREFOR**

(71) Applicant: IRADU, S.L., 41020 Sevilla (ES)
(72) Inventor: SEGURA BLANCA, Juan, de, Dios Avda. Innovacion, E-41020 Sevilla (ES); SEGURA BLANCA, Jose Avda. Innovacion, s/n, E-41020 Sevilla (ES); VAHI SERRANO, Mercedes Avda. Innovacion, s/n, E-41020 Sevilla (ES)
(74) Representative: Esteban Perez-Serrano, Maria Isabel
(86) International application number: PCT/ES2002/000260
(87) International publication number: WO 2003/101221

(57) **Abstract**

Procedure that allows the dehydration of olives for consumption in an automatic way and with perfect organoleptic characteristics being valid for black olives both fresh and in brine, proceeding to their preparation prior to loading the reactor (1), which has a lower cover (2) and another upper cover (3) with sockets (4) and (5) for the extraction and injection of air and with interior temperature and humidity sensors. Once the reactor, which is mounted on a mobile bedframe, is filled, it is transferred by means of a travelling crane to a fixed and slightly inclined bedframe where the maturation and dehydration proceed, subjecting the reactor to some determined turns. After a time the product is extracted and washed, being ready for packaging or conservation under vacuum.

## Description

### OBJECT OF THE INVENTION

The object of the present invention is both the procedure for dehydration of olives, especially black olives prepared for consumption and the necessary equipment to carry out said procedure.

The present invention is characterised in that it allows the dehydration of olives to be achieved, especially black olives producing a quality product for consumption obtained in an automatic way in large quantities.

### BACKGROUND OF THE INVENTION

Up to the present time the procedures employed in the dehydration of natural black olives consist in the employment of fresh or partially fermented fruits that are subjected to a dehydration process by means of common salt, a process that is carried out by putting this mixture to dry in the sun without control whatsoever over the proportions of salt and of olives.

The dehydration processes presently employed are traditional, have a low productivity, and also do not guarantee the homogeneity and uniformity of the final product obtained, as well as not fulfilling the recommended minimum fitosanitary guarantees.

These procedures and means used in the dehydration of the black olives, have drawbacks, like for example extremely salty flavours, presence of moulds and yeasts and that their conservation is not guaranteed. Also the processes employed are not sufficiently automated.

Therefore the objective of the present invention is to develop both a procedure and the means necessary to be able to carry out this procedure so that the aforementioned drawbacks are overcome, achieving a final product obtained in an automated manner and with some perfect organoleptic characteristics.

### DESCRIPTION OF THE INVENTION

The object of the present invention is the procedure for dehydration of especially black olives for consumption both from the fresh natural black olives and from the natural black olives in brine, as well as the necessary equipment to carry out this procedure.

The fresh natural olives come directly from the tree, they arrive at the plant, where they are checked and it is verified that they arrive clean and free from pests, disease and fitosanitary products, with an acceptable degree of ripeness and the colour is not green nor changing. The natural black olives dressed in brine are also subject to control checking that they are free from pests, disease and fitosanitary products. In both cases common salt is used, with dehydrating agent.

The equipment in which the dehydration of the olives takes place is a reactor that consists of a cylindrical body with a front cover and another at the rear, having on one of them a socket for the expulsion of air and on the other cover, a socket for the injection of air, having, also, its pertinent temperature and humidity monitors.

On the body of the reactor and in alignment there are three stainless steel valves for continuous drainage by gravity of the liquids eliminated in the dehydration process.

To proceed to the filling of the reactor, a loading and unloading facility is provided that consists of a bedframe secured to the floor of the plant, a mobile bedframe which by means of a hydraulic piston when rising gradually inclines the reactor to favour the filling thereof. In this mobile bedframe there is a series of supports arranged on each side of the bedframe, there being some rollers on the ends of said supports.

At the middle point of the mobile bedframe a pneumatic wheel is mounted connected with a reduction gear motor, which produces the turning of the reactor at the same time as it is rising, whereby the filling of the reactor in a complete and homogeneous way is favoured. During the filling the bottom of the reactor is seated on a support with elastomer protector of the turning device that is arranged on the end where the two bedframes join. Moreover there is a system of securing the reactor to the loading and unloading facility to avoid slippage in the processes of filling and discharging the reactor that consists of an inverted U-shaped metallic band that is fastened to the bedframes, having, also, a small wheel for turning.

For discharging, the reactor is arranged in the reverse form to that of filling so that the mouth of the reactor is in the point where the two bedframes join. When the reactor is raised by means of the hydraulic system it is braked by the securing system and thanks to the braces it is secured and discharge is allowed at the same time as it also turns, the olives and the salt falling into the product and sa1t separation system.

Once the reactor is filled it is transported to a fixed bedframe by means of a travelling crane. The structure of this fixed bedframe is the same as that of the mobile bedframe of the loading and unloading facility, except for a difference in height between the ends, the bottom being lower than the mouth, having a gradient of 1.8%. Moreover this fixed bedframe also has a system of fixed rollers. Finally in the middle point of the bedframe there is a turning mechanism identical to the one for filling and discharge of the reactor, consisting of a pneumatic wheel connected with a speed variator.

The dehydration procedure of the olives varies depending on whether the olives are fresh and natural or conserved in brine. In both cases there is a first step of reception and physiological and sanitary control; in the case of fresh olives this is followed with the cleaning - washing and drying. Continuing in both cases with the weighing, preclassification and conditioning/selection, addition of the salt, dehydration process, elimination of the salt and dispatch and bulk packaging.

In the case of olives in brine, the controlling liquid is removed in reception before proceeding as stated.

In both cases, the addition of dehydrating agent is established beforehand and in accordance with the quantity of fruit that goes into the reactor, the proportions being between 75-85% of olives and 25-15% of salt.

Once the reactor is full of olives and salt in the accepted percentages, the reactor is arranged on the fixed bedframe, being subjected to a series of turns, and one proceeds to take a series of samples of the liquids eliminated through the valves which the reactors incorporate, as well as measuring the external temperature and internal temperature.

As it has previously been stated, the reactor is arranged with a slight inclination at a percentage gradient that varies from 1 to 5% the preferred inclination being of 1.8%, the bottom being at least 15 cm lower than the mouth, the height from the floor being 15 cm minimum.

During the first 15-20 days, the reactor undergoes a series of turns, between 1 and 4 turns / day. The turns can be complete, that is to say, of 360° or fractional. At the beginning an excessive number of turns are not carried out nor are they very rapid, the object being not to damage the olives.

On the upper cover of the reactor are the points for measuring at a determined moment the interior temperature or humidity, and also the sockets to be able to inject air at ambient temperature or hot air with a degree of humidity that is different depending on the time of the year.

Likewise during the dehydration process the interior temperature of the reactor is monitored, as well as the interior humidity thereof, it being possible to determine if it is necessary to inject air at ambient temperature or gentle draughts of hot air.

The liquid eliminated through the valves can be recycled and to do so it is subjected to a control phase wherein one measures: density in °Bé, conductivity and organoleptic properties, and the density should be above 20° Bé and the conductivity above 190 mS/cm.

The process concludes after 20-30 days when the weight of the olives has decreased by 20-35%, proceeding to the discharge of the reactor, acting in reverse fashion to the filling. All the valves are closed and one proceeds to locate the reactor over the discharge point by means of a travelling crane. The reactor is placed in the reverse position to that of filling and is turned slowly all the olives passing to a belt that separates the fruit from the dehydrating agent residue. With the object of eliminating the salt that could still be stuck to the fruit some fine air draughts are used together with a brushing train, that blow the olives or else a fine water spray. Subsequently it passes into a drying tunnel to remove the remaining humidity, the weight being determined at the same time. Finally clean and dry, the olives are transferred to some clean depositories to which a vacuum is applied for better conservation of the product until it is packed.

### DESCRIPTION OF THE DRAWINGS

To complete the description that is provided below and in order to assist in a better understanding of its characteristics, the present descriptive specification is accompanied with a set of drawings in the figures of which, by way of illustration and not restrictively, the most significant details in the invention are represented.
Figure 1 shows a schematic representation of the reactor arranged on the fixed bedframe.
Figure 2 shows a representation of the natural process followed in the dehydration of fresh black olives.

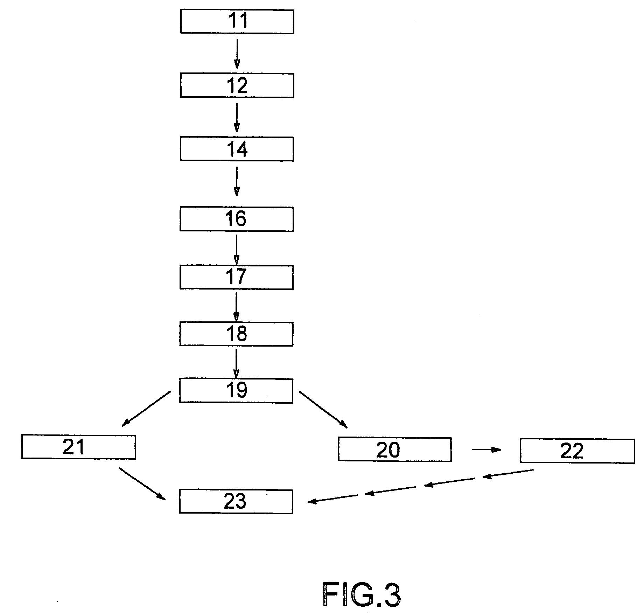

Figure 3 shows a representation of the process followed in the dehydration of natural black olives in brine.

### PREFERABLE REALIZATION OF THE INVENTION

In the light of the aforementioned figures, a preferred method of embodiment of the invention is described below, and the explanation of the drawings is given.

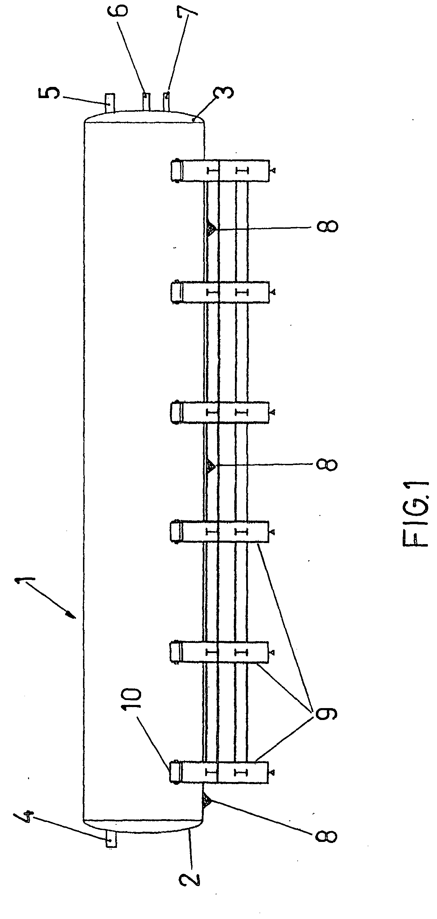

In figure 1 the reactor (1) can be seen necessary to carry out said dehydration process, it has an upper cover (3) and another lower or bottom one (2).

Said cover (2) is secured to the body by means of stainless steel screws with countersunk head and blind nut, housed in the channel prepared to such an end, where an elastomer is included for the purpose of producing a hermetic seal. Said cover in its upper part has a socket (4) for extraction of the air.

The upper cover (3) is manufactured in stainless steel, for fastening it to the body of the reactor (1) it has a fishplate 10 cm of wide on which are mounted 8 lever-action latches for closing. Likewise it has a socket (5) for injecting air either at ambient temperature or with added heat. Likewise it has some sockets (6) and (7) for monitoring the internal temperature and the humidity.

The body of the reactor (1) has on its lower part three valves (8) by means of which continuous drainage is carried out. The valve located closest to the lower cover (2) serves a twofold purpose, to provide continuous drainage and to apply a vacuum.

Likewise the fixed bedframe may be seen on which the reactor is arranged once full. Said bedframe has some supports (9) on the ends of which are some rollers (10).

Together with the reactor it is necessary to employ a loading and unloading facility, which consists of a mobile bedframe that is gradually raised by means of a hydraulic piston system favouring the filling of the reactor. Said mobile bedframe has some supports on each side of the reactor, each one comprising the supports for its corresponding rollers. Likewise said mobile bedframe has a pneumatic wheel connected to a reduction gear motor that gradually produces the turning of the reactor as this is raised, allowing the filling in a homogeneous and complete way.

For turning the reactor a turning device is provided that has a support with an elastomer protector on which is seated the bottom of the reactor in the filling process and a system of braces with elastomer protectors on their ends and which will be of utility at the time of discharging the reactor.

Moreover there is a system for fastening the reactor to the loading equipment to avoid slippage of the reactor in the filling process, which consists of an inverted U-shaped band.

Once the reactor (1) is full and arranged on the mobile bedframe that has just been described, it is transferred by means of a travelling crane to a fixed bedframe like that of the figure, which makes the reactor adopt an inclination of between 1-5%. Said bedframe has a series of rollers (10) mounted on the ends of the supports (9).

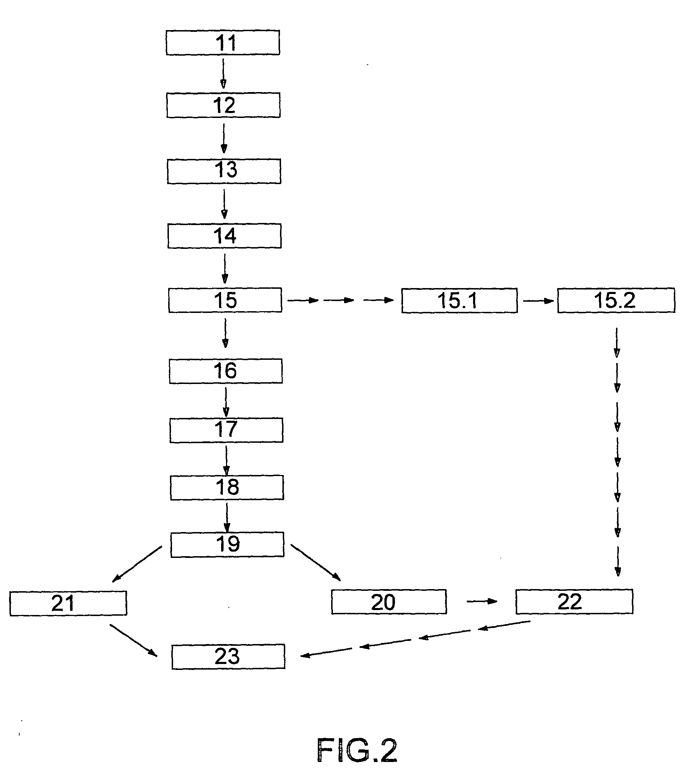

The dehydration procedure of the olives when fresh can be seen in figure 2 and it is as follows:
■ Reception of the olives (11)
■ Physiological/ sanitary control, checking that they are free from pests and disease (12)
■ Cleaning, washing and drying of the olives (13)
■ Weight check (14)
■ Preclassification (15)
■ Adaptation and selection (16)
■ Dosage of the fruit to the reactor together with the addition of salt to produce the maturation (17) (Dehydration process).
■ Elimination of the salt (18)
■ Dispatch (19)
■ Packaging (20) or to bulk storage (21).
■ Adaptation of the final product (22).
■ Vacuum application and
■ Storage (23).

It is likewise observed in said figure 2 that in the preclassification stage (15), all those olives that do not have the appropriate size, pass to a pressing stage (15.1), with the object of obtaining an extra virgin oil (15.2). This extra virgin oil is stored in inertized stainless steel tanks until its use at the time the dehydrated olives are ready for dispatch. Thus oil and olives are obtained from olives which have an identical degree of ripeness and the same quality.

The addition of the dehydrating agent is established beforehand and in accordance with the quantity of fruit that goes into the reactor, being capable of holding a quantity of fruit between 75-85% and between 25-15% of salt.

It is important to point out that contrary to other processes of preparing table olives, except for the washing of the fruit, no type of fluid, or alkaline or aqueous saline treatment intervenes, so that in the process the only effluents that are produced are those coming from the cellular juices of the fresh fruit.

The dehydration procedure in the case of olives in brine consists basically of that explained previously wherein it is not necessary to carry out the procedure of cleaning, washing and drying (13), but instead, once the fruit arrives in tanks, one proceeds to the separation of the brine, proceeding then to the weighing and continuing likewise with the process as in the case of the black olives.

Once the reactor is filled with the fruit and with the salt, one proceeds with the change from the mobile bedframe to the fixed one, whereon the reactor is rotated an average of 1-4 times a day, either by means of complete turns or by means of quarter turns at a rate of ¼ turn each ½ hour. The lower valves (8) are continuously open to drain off the liquid eliminated, which is subjected to a control of (odour, taste, pH, conductivity, density °Bé).

The process finishes after about 20 to 30 days, the weight of the olives having reduced by 30-35%, all the valves are closed in order to proceed to the discharge of the reactor (1) in the reverse way to that in which it was filled. Once the product is extracted it is cleaned of all the salt that it could contain by means of air draughts or a fine shower. It is finally stored in clean reactors to which a vacuum is applied while waiting to be packaged.

The packaging (20) of the olives, can be carried out in three different ways: -
I. - Dry olives just as they are after the whole dehydration process.
II. - Dehydrated olives bathed in oil.
III. - Dehydrated olives in vinaigrette (oil, salt and vinegar).

Forms II and III are pasteurised, this not being necessary for form I.

It is not considered necessary to extend this description further for any expert in the matter to understand the scope of the invention and the advantages that are derived thereof.

The materials, form, size and arrangement of the elements are capable of variation provided they do not alter the essential nature of the invention.

The terms in which this specification has been described are always to be taken in the broadest sense and not restrictively.

## Claims

1. Dehydration procedure of olives for consumption, applicable for preferably black olives, fresh or in brine **characterised in that** it comprises the following stages:
■ Reception of the olives (11)
■ Physiological/sanitary control, checking that they are free of pests and disease (12)
■ Cleaning, washing and drying of the olives (13). Stage that is not necessary for olives in brine.
■ Weight check (14)
■ Preclassification (15)
■ Adaptation and selection (16)
■ Dosage of the fruit to the reactor together with the addition of salt to obtain maturation (17) (Dehydration process).
■ Elimination of the salt (18)
■ Dispatch (19)
■ Packaging (20) or in bulk (21).
■ Adaptation of the final product (22).
■ Vacuum
■ Storage (23).
Wherein the addition of the dehydrating agent is established beforehand and in accordance with the quantity of fruit that goes into the reactor, being capable of containing a quantity of fruit between 75-85% and between 25-15% of dehydrating agent preferably NaCl or common Salt.

2. Procedure, according to claim 1, **characterised in that** for the fresh natural olives, in the preclassification stage (15), all those olives that do not have the appropriate size, pass to a pressing stage (15.l), with the object of obtaining an extra virgin oil (15.2). Said extra virgin oil is stored in inertized stainless steel tanks until its use at the time of the dehydrated olive being prepared for dispatch. Thus oil and olives come from olives which have a same degree of ripeness.

3. Procedure according to claim 1, **characterised in that** when the reactor is filled with the fruit and with the salt, a change takes place from a mobile bedframe to a fixed one, whereon the reactor is rotated an average of 1-4 times a day, either by means of complete turns or by means of quarter turns at a rate of ¼ turn each ½ hour. The lower valves (8) are open continuously for draining the liquid eliminated, which is subject to a control of (odour, taste, pH, conductivity, density °Bé)

4. Procedure according to claim 3, **characterised in that** the process finishes after about 20 to 30 days the weight of the olives having reduced by 30-35%, all the valves are closed in order to proceed to the discharge of the reactor (1) in a reverse manner to that in which it was filled. When the product has been extracted it is cleaned of all the salt that it could contain by means of air draughts or a fine shower. Being finally stored in clean reactors to which a vacuum is applied while waiting to be packaged.

5. Procedure according to claim 3, **characterised in that** the reactor (1) is arranged with an inclination between 1-5%, the bottom being at least 15 cm lower than the mouth, the height from the floor being 15 cm minimum.

6. Procedure, according to claim 1, **characterised in that** the packing stage (20) of the olives, can be carried out in three different ways: -
I. - Dry olives just as they are after the whole dehydration process.
II. - Dehydrated olives bathed in oil.
III. - Dehydrated olives in vinaigrette (oil, salt and vinegar).
where forms II and III are pasteurised, this not being necessary for form I.

7. Equipment necessary to carry out said procedure **characterised in that** it consists of a reactor (1) which has a lower cover (2) and an upper cover (3), likewise it consists of a mobile bedframe for the filling of the fruit together with the salt and of a fixed bedframe for the maturation process; moreover the reactor has three stainless steel valves for the continuous drainage by gravity of the liquids eliminated by the humidity, wherein the valve located closest to the lower cover (2) has a twofold utility, to serve as continuous drainage and for applying a vacuum.

8. Equipment necessary to carry out said procedure, according to claim 7, **characterised in that** in the lower cover (2) of the reactor a socket (4) is mounted for the extraction of air, while in the upper cover (3) there is likewise a socket (5) for the injection of air either at ambient temperature or slightly heated, on said cover (3) there are likewise some sockets (6) and (7) for taking the interior temperature and humidity.

9. Equipment necessary to carry out said procedure, according to claim 7, **characterised in that** the fixed bedframe of the filling/discharge equipment (mobile bedframe) has a hydraulic piston for raising the reactor (1) and to favour the filling thereof. On said mobile bedframe there is a series of supports, arranged on each side of the bedframe and on the ends of said supports some rollers. In the middle point of the mobile bedframe there is a pneumatic wheel connected with a reduction gear motor that produces the turning of the reactor at the same time as it is raised, whereby the filling of the reactor is favoured in a complete and homogeneous way. The bottom of the reactor during the filling is seated on a support with elastomer protector of the turning device that is mounted on the end where the two bedframes join. Futhermore there is a system for fastening the reactor to the loading and unloading facility to avoid slippage in the processes of filling and discharge of the reactor that consists of an inverted U-shaped metallic band that is fastened to the bedframes, having, also, a pneumatic wheel for turning.

10. Equipment necessary to carry out said procedure, according to claim 7, **characterised in that** the structure of the fixed bedframe is the same as that of the mobile bedframe except for a difference in height between the ends, the bottom being lower than the mouth, presenting a gradient between 1-5%. Moreover said fixed bedframe also has a system of fixed rollers (10). Finally in the middle point of the bedframe there is a turning mechanism identical to that for filling and discharge of the reactor, consisting of a pneumatic wheel connected with a speed variator.
